# EUROPÄISCHE PATENTSCHRIFT

(11) **EP 2 682 259 B1**
(45) Veröffentlichungstag und Bekanntmachung des Hinweises auf die Patenterteilung: **02.11.2016**
(21) Anmeldenummer: 12004993.7
(22) Anmeldetag: 05.07.2012
(51) Int. Cl.: B31F 1/24, B31F 1/28

(54) **Verfahren und Vorrichtung zur Herstellung von Wellpappenprodukten mit verschränktem Wellenprofil**
Method and device for the manufacture of corrugated cardboard products with crossed corrugated profile
Procédé et dispositif de fabrication de produits en carton ondulé avec un profil ondulé intriqué

(43) Veröffentlichungstag der Anmeldung: 08.01.2014
(73) Patentinhaber: Progroup AG, 76829 Landau (DE)
(72) Erfinder: Haessig, Christoph, 67250 Hunspach (FR)
(74) Vertreter: Hörschler, Wolfram Johannes

(56) Entgegenhaltungen:
- WO-A1-93/19932
- DE-A1- 1 561 510
- DE-A1-102010 013 269
- FR-A- 1 212 042
- US-A- 4 566 922

## Beschreibung

### Technisches Gebiet

Die Erfindung betrifft eine Vorrichtung und ein Verfahren zur Herstellung von Wellpappenprodukten, welche z. B. als Verpackungsmaterial dienen. Wellpappenprodukte werden aus einzelnen Papierbahnen hergestellt, wobei ein Wellpappenprodukt glatte und gewellte Papierlagen umfasst, die miteinander verbunden sind. Wellpappenprodukte werden in einem kontinuierlichen Verfahren in Maschinen hergestellt, welche mit Papierrollen bestückt werden und Stapel von Wellpappenplatten erzeugen, die z. B. zu Verpackungen weiterverarbeitet werden können.

### Stand der Technik

Aus DE 1 561 510 ist ein Verfahren zur kontinuierlichen Herstellung von steifer Wellpappe bekannt, bei dem zwei Bahnen aus Wellpappe mit schrägen Wellungen aufeinander geklebt werden. Die Bahnen mit schrägen Wellungen werden durch ein Hindurchführen jeweils einer Pappbahn zwischen zwei gekoppelten Wellungszylindem hergestellt, wobei die Wellungszylinder mit wendelförmigen Riffelungen gefertigt sind. Eine Pappbahn, die durch die gekoppelten Wellungszylinder geführt wird, wird bezüglich der Laufrichtung der Wellpappe-Maschine in einem Winkel β, der in einer horizontalen Ebene liegt, an eine glatte Bahn herangeführt und mit dieser verklebt. Hierdurch entsteht eine zusammengesetzte Bahn. Anschließend werden zwei zusammengesetzte Bahnen derart miteinander verbunden, dass ihre gewellten Seiten ohne Zwischenlage miteinander verklebt werden. Nachteilig am Verfahren gemäß DE 1 561 510 ist, dass die hierzu erforderliche Vorrichtung lediglich für Wellpappe ohne eine Zwischenlage zwischen den zusammengesetzten Bahnen ausgelegt ist. Andere Arten von Wellpappe, insbesondere solche mit einer Zwischenlage, können nur nach einem aufwendigen Umrüsten der hierzu eingesetzten Vorrichtung erzeugt werden. Ferner weisen derartige Vorrichtungen eine erhebliche Breite auf und beanspruchen viel Platz.

FR 1 212 042 A offenbart eine Vorrichtung zur Herstellung von Wellpappenprodukten, die zwei Einseitige Maschinen umfasst. Die einflutigen Wellpappebahnen, die von den Einseitigen Maschinen hergestellt werden, werden zusammengeführt und zu einem Endprodukt verklebt. Dabei können die einflutigen Wellpappebahnen mit einer zusätzlichen Deckbahn zu einem zweiflutigen Endprodukt verbunden werden. Alternativ besteht die Möglichkeit, die einflutigen Wellpappebahnen derart mit den anderen zu verkleben, dass die Wellpappenprofile ineinander greifen, so dass ein zweilagiges Wellenprofil entsteht.

In US 4,566,922 ist eine Ausrichtungsstation dargestellt, in der eine Wellpappebahn über ein Walzenpaar geführt wird, das über zwei Lagerstäbe gekoppelt ist. Das Walzenpaar und die Lagerstäbe sind im Wesentlichen rechteckig angeordnet und bilden einen Rahmen. Der Rahmen ist an einem Ende schwenkbar gelagert und am entgegengesetzten Ende mit einem Aktuator verbunden. Eine Betätigung des Aktuators führt zu einer Schwenkbewegung des gesamten Rahmens. Ferner ist eine untere Walze horizontal gegen zwei Druckzylinder gelagert, so dass eine konstante Bahnspannung gewährleistet ist.

DE 10 2010 013 269 A1 offenbart eine Einseitige Maschine, die über ein Riffelwalzenpaar verfügt, das in einem Riffelwalzenmodul über eine Gelenkvorrichtung am Maschinengestell schwenkbar ist. Eine Andrückvorrichtung greift am Riffelwalzenmodul an, um den Anpressdruck zwischen den Riffelwalzen und der Anpresswalze einzustellen. Alternativ kann eine Andrückvorrichtung über einen Hebel die Anpresswalze betätigen. Ferner besteht die Möglichkeit, die einseitige Maschine mit einer Spannvorrichtung auszustatten, welche ein Anpressband spannt.

### Darstellung der Erfindung

Der vorliegenden Erfindung liegt die Aufgabe zugrunde, eine Möglichkeit zur Verfügung zu stellen, in einfacher und kostengünstiger Weise Wellpappenprodukte herzustellen. Ferner liegt der vorliegenden Erfindung die Aufgabe zugrunde, eine Vorrichtung und ein Verfahren zur Herstellung von Wellpappenprodukten bereitzustellen, das schnell und mit niedrigem Aufwand zwischen Wellpappenprodukten unterschiedlicher Architektur umgestellt werden kann. Des Weiteren liegt der Erfindung die Aufgabe zugrunde, eine platzsparende Vorrichtung zur Herstellung von Wellpappenprodukten zur Verfügung zu stellen.

Die erfindungsgemäße Vorrichtung umfasst eine erste Einseitige Maschine und eine zweite Einseitige Maschine, die jeweils mit einem Anpressgurt versehen sind. Die Einseitigen Maschinen sind ferner mit einer ersten bzw. zweiten Riffelwalze ausgestattet, die jeweils dazu ausgebildet sind, ein Wellenprofil in eine Papierbahn zu prägen. Die erste Einseitige Maschine prägt ein Wellenprofil in eine erste Papierbahn und die zweite Einseitige Maschine prägt ein Wellenprofil in eine zweite Papierbahn. Die erste bzw. zweite Papierbahn wird anschließend mittels eines Anpressgurts jeweils mit einer ungewellten Bahn verbunden. Die erste bzw. zweite Papierbahn, die mit einer ungewellten Bahn verbunden ist, bildet eine erste bzw. zweite einflutige Wellpappebahn. Des Weiteren ist die erste Einseitige Maschine mit einer ersten schräggestellten Führungswalze ausgestattet, deren Rotationsachse zwischen Seitenrändern der ersten Papierbahn um einen vertikalen Neigungswinkel geneigt ist.

Das Verbinden der ersten bzw. zweiten Papierbahn mit der ersten bzw. zweiten ungewellten Bahn mittels eines Anpressgurts, der erlaubt, die Verbindung der einzelnen Lagen mit einem hohen Pressimpuls zu beaufschlagen. Die erste bzw. zweite Papierbahn wird mit der ersten bzw. zweiten ungewellten Bahn werden hierbei mit einem Klebstoff miteinander verbunden. Das Aufbringen des Pressimpulses erfolgt durch den Anpressgurt mit niedriger Presskraft, was die mechanische Beanspruchung der bearbeiteten Papierbahnen gering hält. Die Einwirkung einer niedrigen Presskraft ermöglicht es, ein hohes Maß an Qualität des Wellpappenprodukts zu erzielen. Ferner ist ein Anpressgurt im Betrieb vibrationsarm, so dass das Verbinden der Papierbahnen mit den ungewellten Bahnen mit hoher geometrischer Genauigkeit erfolgt. Die erste schräggestellte Führungswalze ist vor einem Eintritt der ersten Papierbahn in einen Walzenspalt der ersten Riffelwalze angebracht. Die erste Papierbahn wird mittels der ersten schräggestellten Führungswalze über ihre Breite in einem Spannungszustand gehalten. Der Spannungszustand gewährleistet einen exakten Einzug der ersten Papierbahn in einen Walzenspalt der ersten Riffelwalze, wodurch die durch die erste Riffelwalze aufgebrachte Wellung der ersten Papierbahn ein hohes Maß an Präzision aufweist. Dies erlaubt, die Breite der Vorrichtung gering zu halten und Platz zu sparen. Breite schräge Bahnführungen werden vermieden. Alternativ kann bei gegebener Baubreite der Vorrichtung die Breite der bearbeiteten Papierbahnen erhöht werden. Hierdurch steigt die pro Zeiteinheit produzierbare Menge an Wellpappenprodukt.

Die erfindungsgemäße Vorrichtung kann ferner eine zweite Einseitige Maschine aufweisen, die mit einer zweiten schräggestellten Führungswalze versehen ist. Die Achse der zweiten schräggestellten Führungswalze kann zwischen Seitenrändern der zweiten Papierbahn um einen vertikalen Neigungswinkel geneigt sein. Die zweite schräggestellte Führungswalze kann in vorteilhafter Weise derart in der zweiten Einseitigen Maschine angebracht sein, dass die zweite Papierbahn vor einem Kontakt mit der zweiten Riffelwalze über die zweite schräggestellte Führungswalze geführt wird. Der vertikale Neigungswinkel der Achse der zweiten schräggestellten Führungswalze erlaubt, die zweite Papierbahn in einem Spannungszustand zu halten. Der Spannungszustand der zweiten Papierbahn gewährleistet einen exakten Einzug der zweiten Papierbahn in einen Walzenspalt der zweiten Riffelwalze, wodurch das durch die zweite Riffelwalze aufgebrachte Wellenprofil ein hohes Maß an Präzision aufweist. Der vertikale Neigungswinkel der Achse der zweiten schräggestellten Führungswalze ermöglicht ferner, die zweite Papierbahn parallel zur zweiten ungewellten Bahn und der Laufrichtung der Vorrichtung zu führen. Hierdurch wird die Breite der Vorrichtung gering gehalten; breite schräge Bahnführungen werden vermieden.

Des Weiteren können in der erfindungsgemäßen Vorrichtung die erste und zweite schräggestellte Führungswalze aufweisen, die um gegensinnig orientierte vertikale Neigungswinkel geneigt sind. Die Orientierung des vertikalen Neigungswinkels der ersten bzw. zweiten schräggestellten Führungswalze bewirkt eine gleichmäßige Straffung dieser von Seitenrand zu Seitenrand. Der vertikale Neigungswinkel der ersten bzw. zweiten schräggestellten Führungswalze entspricht im Wesentlichen der Orientierung einer Riffelung der helicoidalen Riffelwalzen. Hierdurch wird eine materialgerechte Zuführung einer Papierbahn zu einem Walzenspalt einer Riffelwalze gewährleistet, was eine exakte Verarbeitung der Papierbahnen erlaubt.

Des Weiteren kann die Vorrichtung mit einer ersten Einseitigen Maschine versehen sein, die eine erste Bahnförderrichtung aufweist, die einer zweiten Bahnförderrichtung der zweiten Einseitigen Maschine entgegengesetzt ist. Entgegengesetzte Bahnförderrichtungen erlauben es, die von den Einseitigen Maschinen hergestellte einflutige Wellpappebahnen auf geringer Länge in Laufrichtung der Vorrichtung zusammenzuführen. Hierdurch kann die erfindungsgemäße Vorrichtung in platzsparender Weise kurz gehalten werden.

Des Weiteren kann bei der erfindungsgemäßen Vorrichtung die zweite Einseitige Maschine mit einer Umlenkung versehen sein, die dazu ausgebildet ist, die zweite einflutige Wellpappebahn umzulenken. Die Umlenkung stellt eine einfache und zuverlässige Möglichkeit zur Verfügung, eine einflutige Wellpappebahn zu drehen oder zu wenden. In besonders vorteilhafter Weise steht die zweite einflutige Wellpappebahn mit der Umlenkung in einem Umschlingungswinkel von 90° bis 180° in Kontakt In weiter vorteilhafter Weise ist die Umlenkung mit einem Biegeradius von 0,5 m bis 1,5 m ausgebildet
Ein derartig großer Umschlingungswinkel und derartig großer Biegeradius ermöglicht eine material-schonende Umlenkung der zweiten einflutigen Wellpappebahn. Ferner wird eine hohe Formstabilität einer gewellten Bahn der einflutigen Wellpappebahn gewährleistet. Ein Verzug oder eine Verformung der zweiten einflutigen Wellpappebahn wird hierdurch minimiert, wodurch die erzielbare Qualität der Wellpappenprodukte steigt. Bevorzugt wird die Umlenkung als ein stationär angeordnetes Leitblech oder ein stationär angeordnetes Umlenkblech ausgeführt, welches die zweite einflutige Wellpappebahn in einem Radius zwischen 0,5 und 1,5 mm umlenkt, so dass aufgrund der gewählten Radienbereiche eine hohe mechanische Belastung der ersten einflutigen Wellpappebahn vermieden wird.

Die erfindungsgemäße Vorrichtung kann des Weiteren mit einer ersten Riffelwalze ausgestattet sein, die mit einer helicoidalen Riffelung versehen ist. Die helicoidale Riffelung weist einen Steigungswinkel bezogen auf die Rotationsachse der ersten Riffelwalze auf. Die helicoidale Riffelung mit Steigungswinkel entlang der Rotationsachse der ersten Riffelwalze ermöglicht es, die erste Papierbahn mit einem Wellenprofil zu versehen, das schräg zur ersten Bahnförderrichtung ausgerichtet ist. Eine helicoidale Riffelwalze ermöglicht somit, in einfacher Weise in einem kontinuierlichen Herstellungsprozess eine Papierbahn mit einem Wellenprofil zu versehen, das materialsparende und steife Wellpappen-Architekturen ermöglicht.

In einer weiteren vorteilhaften Ausführungsform weist der Steigungswinkel der helicoidalen Riffelung der ersten Riffelwalze die gleiche Orientierung auf wie der Neigungswinkel der ersten vertikal geneigten Führungswalze. Die Orientierung des Steigungswinkels und des vertikalen Neigungswinkels beziehen sich hierbei, gesehen in einer Förderrichtung der ersten bzw. zweiten Papierbahn, auf eine Förderebene der ersten bzw. zweiten Papierbahn. Ferner sind in einer vorteilhaften Ausführungsform der erfindungsgemäßen Vorrichtung der Steigungswinkel der helicoidalen Riffelung der ersten Riffelwalze und der Neigungswinkel der ersten vertikal geneigten Führungswalze im Wesentlichen gleich groß. Dies gewährleistet für das herzustellende Wellpappenprodukt ein hohes Maß an Verarbeitungspräzision. Ferner wird hierdurch eine einseitige mechanische Überbeanspruchung der Papierbahn vermieden, die zu einem Bahnriß führen kann. Die Zuverlässigkeit der erfindungsgemäßen Vorrichtung wird hierdurch gesteigert. In gleicher Weise kann die erfindungsmäße Vorrichtung ferner mit einer zweiten Riffelwalze ausgestattet sein, die über eine helicoidale Riffelung verfügt. Dabei weist die helicoidale Riffelung der zweiten Riffelwalze in Bezug auf die Rotationsachse einen Steigungswinkel auf.

In einer weiteren vorteilhaften Ausführungsform weist der Steigungswinkel der helicoidalen Riffelung der zweiten Riffelwalze die gleiche Orientierung auf wie der Neigungswinkel der zweiten vertikal geneigten Führungswalze. Die Orientierung des Steigungswinkels und des vertikalen Neigungswinkels beziehen sich hierbei, gesehen in einer Förderrichtung der ersten bzw. zweiten Papierbahn, auf eine Förderebene der ersten bzw. zweiten Papierbahn. Die Größe des Steigungswinkels der helicoidalen Riffelung und der Neigungswinkel der zweiten vertikal geneigten Führungswalze können dabei im Wesentlichen gleich sein. Es ergeben sich die gleichen technischen Vorteile wie bei der ersten Riffelwalze und der ersten vertikal geneigten Führungswalze. In einer vorteilhaften Ausführungsform, in der jeweils der erste vertikale Neigungswinkel in Orientierung und Größe dem helicoidalen Steigungswinkel der ersten Riffelwalze entspricht und der zweite vertikale Neigungswinkel in Orientierung und Größe dem helicoidalen Steigungswinkel der zweiten Riffelwalze, wird ein hohes Maß an Verarbeitungspräzision im angestrebten Wellpappenprodukt erzielt.

Ferner kann die erfindungsgemäße Vorrichtung über eine erste Riffelwalze mit helicoidaler Riffelung verfügen, deren Steigungswinkel mit einem Schränkungswinkel α korrespondiert, um den eine Wellung der ersten einflutigen Wellpappebahn verschränkt ist.

Des Weiteren kann die zweite Riffelwalze mit helicoidaler Riffelung über einen Steigungswinkel verfügen, der mit einem Schränkungswinkel β korrespondiert, um den die Wellung der zweiten einflutigen Wellpappebahn verschränkt ist. Die erzielbare Genauigkeit der Schränkungswinkel α bzw. β korrespondiert mit der Fertigungspräzision, in der die erste bzw. die zweite Riffelwalze hergestellt ist. Hierdurch können die Schränkungswinkel α bzw. β in der Wellpappen-Architektur exakt eingestellt werden. Hierdurch werden Wellpappen-Architekturen realisierbar, die die Festigkeit des eingesetzten Papiers vollständig ausnutzen. Hierdurch können im Sinne von Leichtbau materialsparende und stabile Wellpappen-Architekturen realisiert werden, deren Festigkeit als Wellpappenverbund nochmals gesteigert ist. Dies betrifft insbesondere Wellpappen-Architekturen, in denen die Schränkungswinkel α bzw. β unterschiedliche Beträge oder Orientierungen aufweisen und dadurch in einer beispielsweise mittig verlaufenden Trennebene gitterförmige Strukturen ausbilden.

In weiterer vorteilhafter Weise kann die erfindungsgemäße Vorrichtung über eine Zuführwalze verfügen, welche zum Heranführen einer zusätzlichen Papierbahn geeignet ist. Die Zuführwalze kann in einfacher Weise in ein Maschinenschema integriert werden, wenn die Vorrichtung für die Herstellung eines Wellpappenprodukts einzurichten ist, welches eine zusätzliche Papierbahn erfordert, beispielsweise einer Zwischenlage. Ferner kann die Zuführwalze in der Vorrichtung in einfacher Weise deaktiviert werden, wenn die Vorrichtung für die Herstellung von Wellpappenprodukten einzurichten ist, die nur einflutige Wellpappebahnen umfassen.

Ferner kann bei der erfindungsgemäßen Vorrichtung die zweite Einseitige Maschine zum Betrieb in entgegengesetzte Betriebsrichtungen ausgebildet sein. Dabei kann die Betriebsrichtung der zweiten Einseitigen Maschine umgekehrt werden. Hierdurch ist es möglich, mit geringem Aufwand das Maschinenschema der erfindungsgemäßen Vorrichtung zu modifizieren. Eine Modifikation des Maschinenschemas erlaubt, die Abläufe eines mit der Vorrichtung durchgeführten Herstellungsprozesses zu verändern, und verschiedene Konfigurationen der Vorrichtung verwirklichen. Der mit der Vorrichtung durchgeführte Herstellungsprozess kann somit mit geringem Aufwand an unterschiedliche herzustellende Wellpappenprodukte angepasst werden. Hierdurch weist die erfindungsgemäße Vorrichtung ein breites Einsatzspektrum auf und ermöglicht eine kostengünstige Herstellung des zu produzierenden Wellpappenprodukts bei gleichzeitig kurzen Umrüstzeiten.

Des Weiteren kann die erfindungsgemäße Vorrichtung mit einer dritten Einseitigen Maschine ausgestattet sein, die zur Herstellung einer dritten einflutigen Wellpappebahn dient. Dabei weist die dritte Einseitige Maschine eine dritte Riffelwalze auf, die zur Prägung eines Wellenprofils auf eine dritte Papierbahn ausgebildet ist. Die Verwendung einer dritten Einseitigen Maschine erlaubt es, mit der erfindungsgemäßen Vorrichtung Wellpappenarchitekturen herzustellen, die eine erhöhte Komplexität aufweisen. Die erfindungsgemäße Vorrichtung kann somit eine größere Zahl von Wellpappenprodukten herstellen, so dass das Einsatzspektrum vergrößert wird. Darüber hinaus erlauben komplexe Wellpappenarchitekturen, die Festigkeit und Steifigkeit des angestrebten Wellpappenprodukts exakt an den vorgesehenen Verwendungszweck anzupassen. Die Umrüstung auf die Konfiguration mit der dritten Einseitigen Maschine kann in einer kurzen Umrüstzeit durchgeführt werden. Dabei sind zwischen zwei Konfigurationen fliegende Wechsel möglich und effektive Umrüstzeiten vom einigen Minuten realisierbar. Die erfindungsgemäße Vorrichtung stellt eine Möglichkeit zur Verfügung, in einfacher Weise angepasste, effiziente und rationelle Wellpappenprodukte herzustellen.

Ferner kann bei der erfindungsgemäßen Vorrichtung mindestens eine der Einseitigen Maschinen mit jeweils einer Leimauftragwalze versehen sein. Eine Leimauftragwalze gewährleistet in einfacher und zuverlässiger Weise eine stabile Verbindung der Papierbahnen und ungewellten Bahnen, die zu einflutigen Wellpappebahnen verbunden werden.

Die Erfindung betrifft ferner ein Verfahren zur Herstellung von Wellpappenprodukten, mit den Merkmalen des Anspruchs 10.

Beim erfindungsgemäßen Verfahren ist die erste und/oder zweite schräggestellte Führungswalze zwischen Seitenrändern der ersten bzw. zweiten Papierbahn um einen vertikalen Neigungswinkel geneigt sein. Der vertikale Neigungswinkel ermöglicht, die erste bzw. zweite Papierbahn parallel zu einer ersten bzw. zweiten Bahnförderrichtung der ersten bzw. zweiten Einseitigen Maschine und der Laufrichtung der Vorrichtung den Riffelwalzen zuzuführen.

Ferner kann beim erfindungsgemäßen Verfahren eine erste Einseitige Maschine eingesetzt werden, die eine erste Bahnförderrichtung aufweist, die einer zweiten Bahnförderrichtung der zweiten Einseitigen Maschine entgegengesetzt ist. Entgegengesetzte Bahnförderrichtungen erlauben es, die von den Einseitigen Maschinen hergestellte einflutige Wellpappebahnen auf geringer Länge in Laufrichtung der Vorrichtung zusammenzuführen.

Das erfindungsgemäße Verfahren kann des Weiteren in einer Vorrichtung mit einer ersten Riffelwalze ausgestattet sein, die mit einer helicoidalen Riffelung versehen ist. Die helicoidale Riffelung mit einem Steigungswinkel entlang der Achse der ersten Riffelwalze ermöglicht es, die erste Papierbahn mit einer Wellung zu versehen, die schräg zur ersten Bahnförderrichtung ausgerichtet ist. Eine helicoidale Riffelwalze ermöglicht somit, in einfacher Weise in einem kontinuierlichen Herstellungsprozess eine Papierbahn mit einer Wellenprofil zu versehen, das materialsparende und steife Wellpappen-Architekturen ermöglicht. In gleicher Weise kann beim erfindungsmäßen Verfahren ferner eine zweiten Riffelwalze vorgesehen sein, die über eine helicoidale Riffelung verfügt.

Ferner kann beim erfindungsgemäßen Verfahren eine erste Riffelwalze mit helicoidaler Riffelung eingesetzt werden, deren Steigungswinkel einen Schränkungswinkel α bestimmt, um den das Wellenprofil der ersten einflutigen Wellpappebahn bei Austritt aus der ersten Einseitigen Maschine verschränkt ist. Des Weiteren kann ebenfalls die zweite Riffelwalze mit helicoidaler Riffelung über einen Steigungswinkel verfügen, der den Schränkungswinkel β bestimmt, um den das Wellenprofil der zweiten einflutigen Wellpappebahn bei Austritt aus der zweiten Einseitigen Maschine verschränkt ist. Die erzielbare Genauigkeit der Schränkungswinkel α bzw. β korrespondiert mit der Fertigungspräzision, mit der die erste bzw. zweite Riffelwalze hergestellt ist. Hierdurch können die Schränkungswinkel α bzw. β in der Wellpappen-Architektur exakt eingestellt werden

Hierdurch werden Wellpappen-Architekturen realisierbar, die die Festigkeiten des eingesetzten Papiers vollständig ausnutzen. Hierdurch können im Sinne von Leichtbau materialsparende, effiziente und stabile Wellpappen-Architekturen realisiert werden. Dies betrifft insbesondere Wellpappen-Architekturen, in denen die Schränkungswinkel α bzw. β unterschiedliche Beträge oder Orientierungen aufweisen und dadurch in einer mittigen Trennebene gitterförmige Strukturen ausbilden.

Beim erfindungsgemäßen Verfahren kann ferner das Verbinden der ersten und zweiten einflutigen Wellpappebahn derart erfolgen, dass die gewellten Bahnen der einflutigen Wellpappebahnen miteinander verklebt werden. Dies gewährleistet einen unmittelbaren Kontakt der gewellten Bahnen und spart den Einsatz einer zusätzlichen Papierlage zwischen den gewellten Bahnen. Wellpappen-Architekturen ohne zusätzliche Papierlage zwischen gewellten Bahnen können bei ansonsten gleichen Parametern ein günstigeres Verhältnis von Steifigkeit zu Gewicht aufweisen. Ferner geht die Einsparung einer Papierlage in einem Wellpappenprodukt mit einem erheblichen Kostenvorteil und Einsparung von Ressourcen einher.

Die Erfindung betrifft ferner ein Wellpappenprodukt, das eine erste, zweite, dritte und eine zusätzliche ungewellte Bahn umfasst. Des Weiteren umfasst das erfindungsgemäße Wellpappenprodukt eine erste, zweite und dritte gewellte Bahn, die jeweils zwischen zwei ungewellten Bahnen liegen.

Dabei weist das erfindungsgemäße Wellpappenprodukt in der dritten gewellten Bahn ein Wellenprofil auf, das zu Seitenrändern des Wellpappenprodukts im Wesentlichen im rechten Winkel steht. Ein derart ausgerichtetes Wellenprofil gewährleistet eine hohe Formstabilität des Wellpappenprodukts unter einer Druckbelastung. Verzerrungen werden minimiert. Des Weiteren ist das erfindungsgemäße Wellpappenprodukt mit einer ersten gewellten Bahn versehen, die ein Wellenprofil aufweist, das zu Seitenrändern des Wellpappenprodukts um einen Schränkungswinkel α geneigt ist. Ein um einen Schränkungswinkel α geneigtes Wellenprofil einer gewellten Bahn verleiht dem Wellpappenprodukt eine erhöhte Biegesteifigkeit. In gleicher Weise kann das erfindungsgemäße Wellpappenprodukt ferner mit einer zweiten gewellten Bahn ausgestattet sein, deren Wellenprofil zu Seitenrändern des Wellpappenprodukts um einen Schränkungswinkel β geneigt. ist. Wellenprofile, die um einen Schränkungswinkel α und/oder β geneigt sind erhöhen die Längsbiegesteifigkeit des Wellpappenprodukts.

In einer vorteilhaften Ausführungsform des erfindungsgemäßen Wellpappenprodukts weist die dritte gewellte Bahn eine größere Fluthöhe auf als die erste und zweite gewellte Bahn. Die Fluthöhe einer gewellten Bahn bestimmt die Steifigkeit, und damit das Biegeverhalten eines Wellpappenprodukts. Ferner bestimmt die Fluthöhe einer gewellten Bahn die Stapelfähigkeit einer Verpackung, die aus dem Wellpappenprodukt hergestellt werden kann

Die Verwendung von gewellten Bahnen unterschiedlicher Fluthöhe erlaubt es, die Steifigkeit und Festigkeit des herzustellenden Wellpappenprodukts exakt einzustellen. Diese Anpassungsfähigkeit erlaubt es, das erfindungsgemäße Wellpappenprodukt auf eine Vielzahl von Einsatzmöglichkeiten hin zu optimieren. Das erfindungsgemäße Wellpappenprodukt ist im Sinne von Leichtbau effizient und rationell.

In einer weiteren vorteilhaften Ausführungsform des erfindungsgemäßen Wellpappenprodukts stehen in mindestens einer Ebene eines Bahnlängsschnitts die Kopfpunkte der ersten und zweiten gewellten Bahn im Bereich von Kopf- bzw. Fußpunkten der dritten gewellten Bahn mit der dritten bzw. zweiten ungewellten Bahn in Kontakt. Mechanische Belastungen, die in die erste bzw. zweite gewellte Bahn eingeleitet werden, werden an die Kopf- bzw. Fußpunkte der dritten gewellten Bahn weitergegeben. Das Einleiten einer mechanischen Last in einen Kopf- bzw. Fußpunkt einer gewellten Bahn erlaubt es, deren Druckstabilität optimal auszunutzen. Drucklasten, die auf das erfindungsgemäße Wellpappenprodukt einwirken, werden derart in die druckstabile dritte gewellte Bahn eingeleitet und Verformungen des Wellpappenprodukts an den Seitenrändern reduziert. Das erfindungsgemäße Wellpappenprodukt ist effizient im Sinne von Leichtbau und gewährleistet eine optimale Ausnutzung der Materialeigenschaften der eingesetzten Papierbahnen.

Kurze Beschreibung der Figuren.

Anhand der Zeichnung wird die Erfindung nachstehend eingehender beschrieben.

Es zeigt:
- Figur 1: eine erste Konfiguration einer ersten Einseitigen Maschine sowie einer zweiten Einseitigen Maschine, wobei die jeweils erzeugten einflutigen Wellpappebahnen mit ihren gewellten Bahnen einander zugewandt sind,
- Figur 2: eine zweite Konfiguration der ersten Einseitigen Maschine und der zweiten Einseitigen Maschinen, wobei die beiden hergestellten einflutigen Wellpappebahnen gleichsinnig ablaufen und eine zusätzliche ungewellte Bahn separat zugeführt wird,
- Figur 3: eine Riffelwalze mit Gegenstück, der eine schräggestellte Führungswalze zugeordnet ist,
- Figur 4: eine perspektivische Draufsicht auf eine eine helicoidale Riffelung aufweisende Riffelwalze und
- Figur 5: eine Draufsicht auf die ein verschränktes Wellprofil aufweisenden einflutigen Wellpappebahnen,
- Figur 6: eine Seitenansicht einer Zusammenführung zweier einflutiger Wellpappebahnen zu einem Wellpappenprodukt
- Figur 7: eine dritte Anordnung einer ersten Einseitigen Maschine mit einer zweiten und dritten Einseitigen Maschine, in der drei einflutige Wellpappebahnen zu einem Wellpappenprodukt verbunden werden,
- Figur 8: einen Aufbau eines Wellpappenprodukts, das drei gewellte Bahnen umfasst, deren Wellenprofile unterschiedlich verschränkt sind.

### Ausführungsvarianten

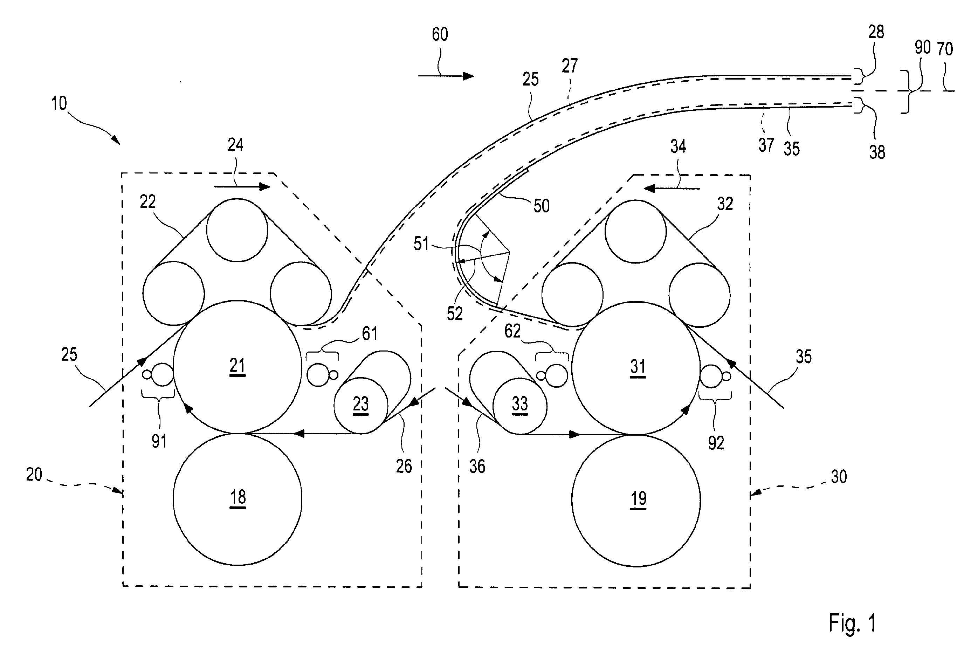

Figur 1 ist eine erste Anordnungsmöglichkeit einer ersten Einseitigen Maschine und einer zweiten Einseitigen Maschine zu entnehmen, aus denen jeweils einflutige Wellpappebahnen mit ihrer jeweils gewellten Bahn einander gegenüberliegend wegbefördert werden.

Eine erste Einseitige Maschine 20 umfasst eine erste Riffelwalze 21 und deren Gegenstück 18, sowie ein dieser ersten Riffelwalze 21 zugeordneten ersten Anpressgurt 22, der über mehrere Umlenkwalzen 96, 97 umläuft und sich mit einem Teil um den Umfang der ersten Riffelwalze 21 schmiegt. Einlaufseitig ist die erste Riffelwalze 21 der ersten Einseitigen Maschine 20 eine erste schräggestellte Führungswalze 23 zu entnehmen. Wie in Figur 1 durch die perspektivische Wiedergabe der ersten schräggestellten Führungswalze 23 angedeutet, ist diese in Bezug auf die Zuführebene einer Papierbahn 26 bezogen auf die Vertikale schräg gestellt.

Die einlaufende Papierbahn 26 passiert zunächst den Umfang der ersten schräggestellten Führungswalze 23, wird durch diese ausgelenkt und läuft im ausgelenkten vorgespannten Zustand in den Walzenspalt zwischen der ersten Riffelwalze 21 und deren Gegenstück 18 ein. Gleichzeitig läuft eine erste ungewellte Bahn 25, die ungewellt bleibt, auf den Umfang der ersten Riffelwalze 21 auf und überdeckt die Oberseite der vom Umfang der ersten Riffelwalze 21 ablaufenden, nunmehr ein gewelltes Profil aufweisenden Papierbahn 26. Beide Bahnen, d.h. die erste ungewellte Bahn 25 und die nunmehr gewellte Bahn 27 passieren den Anpressspalt zwischen dem umlaufenden ersten Anpressgurt 22 und dem Umfang der ersten Riffelwalze 21. Eine erste einflutige Wellpappebahn 28 die, die erste ungewellte Bahn 25 und gewellte Bahn 27 umfasst, läuft in eine ersten Bahnförderrichtung 24 aus der ersten Einseitigen Maschine 20 in einem vertikal S-förmig geschwungenen Bogen ab.

Wie der Darstellung gemäß Figur 1 des Weiteren zu entnehmen ist, umfasst die erfindungsgemäß vorgeschlagene Vorrichtung darüber hinaus eine zweite einseitige Maschine 30. Analog zur ersten Einseitigen Maschine 20, umfasst die zweite Einseitige Maschine 30 eine zweite Riffelwalze 31. Die zweite Riffelwalze 31 wirkt mit ihrem Gegenstück 19 zusammen. In einen Walzenspalt, der durch den Umfang der zweiten Riffelwalze 31 gebildet wird, läuft eine Papierbahn 36 ein, die durch eine zweite schräggestellte Führungswalze 33, die in Bezug auf die vertikale Förderebene schräggestellt ist, vorgespannt und ausgelenkt wird. Die zweite Papierbahn 36, welche die zweite schräggestellte Führungswalze 33 passiert, wird im Walzenspalt zwischen der zweiten Riffelwalze 31 und deren Gegenstück 19 mit einem Wellenprofil versehen. Die zweite Papierbahn 36 verlässt nunmehr als gewellte Bahn 37 zusammen mit einer zweiten ungewellten Bahn 35, die ebenfalls der in Richtung auf den Umfang der zweiten Riffelwalze 31 gefördert wird, nach Passieren des zweiten Anpressgurtes 32 die zweite Einseitige Maschine als zweite einflutige Wellpappebahn 38. Die zweite einflutige Wellpappebahn 38 wird nach Verlassen der zweiten Einseitigen Maschine 30 über eine Umlenkung 50 geführt. Bei der Umlenkung 50 handelt es sich insbesondere um eine stationär ausgebildete Umlenkung 50 in Gestalt eines Umlenkbleches oder eines Leitbleches. Durch die Umlenkung 50 wird erreicht, dass die frisch erzeugte zweite einflutige Wellpappebahn 38, die zweite ungewellte Bahn 35 und die gewellte Bahn 37 umfassend, unter minimaler mechanischer Beanspruchung in eine Laufrichtung 60 umgelenkt wird. Dazu weist die Umlenkung einen relativ groß gewählten Radius auf, der vorzugsweise im Bereich zwischen 0,5 m und 1,5 m liegt, um einen möglichst gleichmäßigen Förderpfad zu gewährleisten, der nur geringe mechanische Beanspruchungen in der zweiten einflutigen Wellpappebahn 38 hervorruft.

Nach Verlassen der zweiten Einseitigen Maschine 30, liegen die erste einflutige Wellpappebahn 28 mit ihrer gewellten Bahn 27 nach unten zeigend sowie die frisch erzeugte, zweite einflutige Wellpappebahn 38 mit ihrer gewellten Bahn 37 nach oben zeigend, einander gegenüber. Die nunmehr erzeugten einflutigen Wellpappebahnen 28 und 38 können in einer mittigen Trennebene 70 nunmehr zusammengeführt werden, so dass ein Wellpappenprodukt entsteht, welches ohne eine Zwischenlage auskommt. An den verschränkt zueinander verlaufenden Wellenprofilen der einander zuweisenden gewellten Bahnen 27 und 37 stoffschlüssig verbunden, vorzugsweise verklebt. Es entsteht ein Wellpappenprodukt 90 das sich durch eine hohe mechanische Stabilität auszeichnet. Die hohe mechanische Stabilität erfährt das Wellpappenprodukt 90 dadurch, dass wegen der helicoidalen Riffelung 41 auf dem Umfang der beiden Riffelwalzen 21, 31 zwischen den einflutigen Wellpappebahhnen 28, 38 ein verschränktes Gittermuster entsteht.

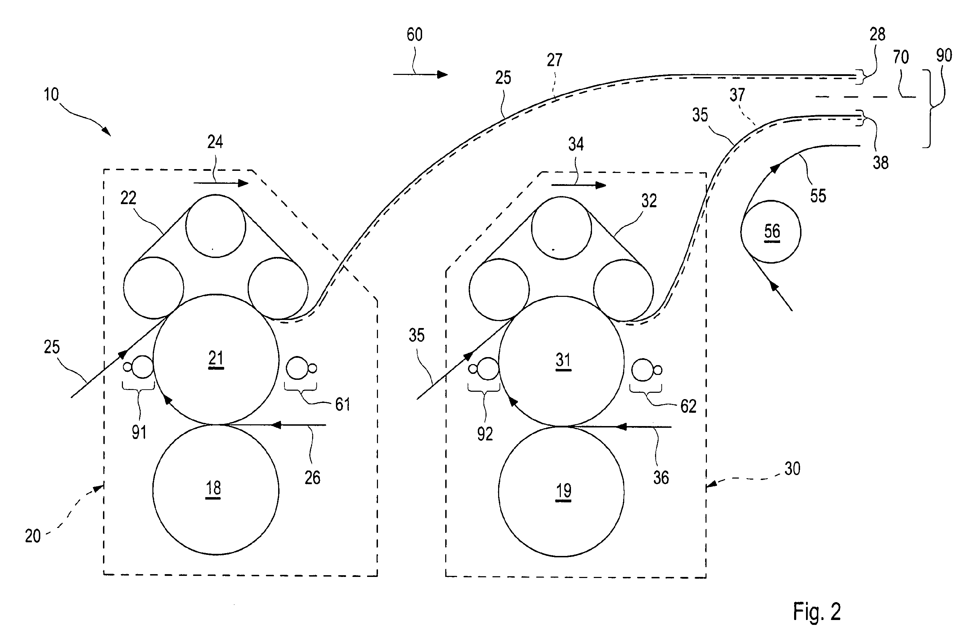

Der Darstellung gemäß Figur 2 ist eine weitere Konfiguration der erfindungsgemäß vorgeschlagenen Vorrichtung, die eine erste Einseitige Maschine 20 und eine zweite Einseitige Maschine 30 umfasst, zu entnehmen.

Aus der Darstellung gemäß Figur 2 geht hervor, dass die erste Einseitige Maschine 20 gemäß der Darstellung in Figur 2 analog zur ersten Einseitigen Maschine 20 gemäß der Ausführungsvariante in Figur 1 aufgebaut ist. Figur 2 zeigt, dass der in der ersten Einseitigen Maschine 20 angeordneten ersten Riffelwalze 21 der erste Anpressgurt 22 zugeordnet ist. Ferner s der ersten Riffelwalze 21 ein Gegenstück 18 zugeordnet, so dass diese einen Walzenspalt ausbilden, vor dem eine erste schräggestellte Führungswalze 23 angeordnet ist. Durch die schräggestellte Führungswalze wird die erste Papierbahn 26 gespannt und ausgelenkt. Ferner läuft die erste ungewellte Bahn 25 in den Anspressspalt zwischen dem ersten Anpressgurt 22 und dem Umfang der ersten Riffelwalze 21 ein. Am Umfang der ersten Riffelwalze 21 entsteht durch eine helicoidale Riffelung 41 aus der einlaufenden Papierbahn 26 die gewellte Bahn 27, die ein verschränkt verlaufendes Wellenprofil aufweist. Aus der ersten Einseitigen Maschine 20 läuft die erste einflutige Wellpappebahn 28, die erste ungewellte Bahn 25, und die nunmehr gewellte Bahn 27 umfasst, aus. Aus der Darstellung gemäß Figur 2 lässt sich entnehmen, dass die erste einflutige Wellpappebahn 28 in Laufrichtung 60 auf eine mittige Trennebene 70 zuläuft.

In der in Figur 2 dargestellten Konfiguration der zweiten Einseitigen Maschine 30 läuft die zweite ungewellte Bahn 35 in gleicher Richtung wie die erste ungewellte Bahn 25 auf den Umfang der zweiten Riffelwalze 31 auf. Des Weiteren läuft die zweite Papierbahn 36 in gleicher Richtung wie die erste Papierbahn 26 in den Walzenspalt zwischen der zweiten Riffelwalze 31 und deren Gegenstück 19. Vor diesem Walzenspalt ist die zweite schräggestellte Führungswalze 33 auf der Bahneinlaufseite der Papierbahn 36 zugeordnet. Dadurch ergibt sich, dass die zweite einflutige Wellpappebahn 38 in der zweiten Bahnförderrichtung 34, die gleich der Laufrichtung 60 und der ersten Bahnförderrichtung 24 ist, zweite Einseitige Maschine 30 verlässt.

Der Darstellung gemäß Figur 2 ist darüber hinaus zu entnehmen, dass in dieser Konfiguration eine Zuführwalze 56 vorgesehen ist, über die eine zusätzlich ungewellte Bahn 55 abläuft und die gewellte Bahn 37 herangeführt wird, so dass ein Wellpappenprodukt 90 gebildet wird, das die erste ungewellte Bahn 25, die gewellte Bahn 27, die zweite ungewellte Bahn 35, die gewellte Bahn 37, und die über die Zuführwalze 56 herangeführte zusätzliche ungewellte Bahn 55 umfasst. Es entsteht ein fünflagiges Wellpappenprodukt 90 mit zwei gewellten Bahnen 27, 37.

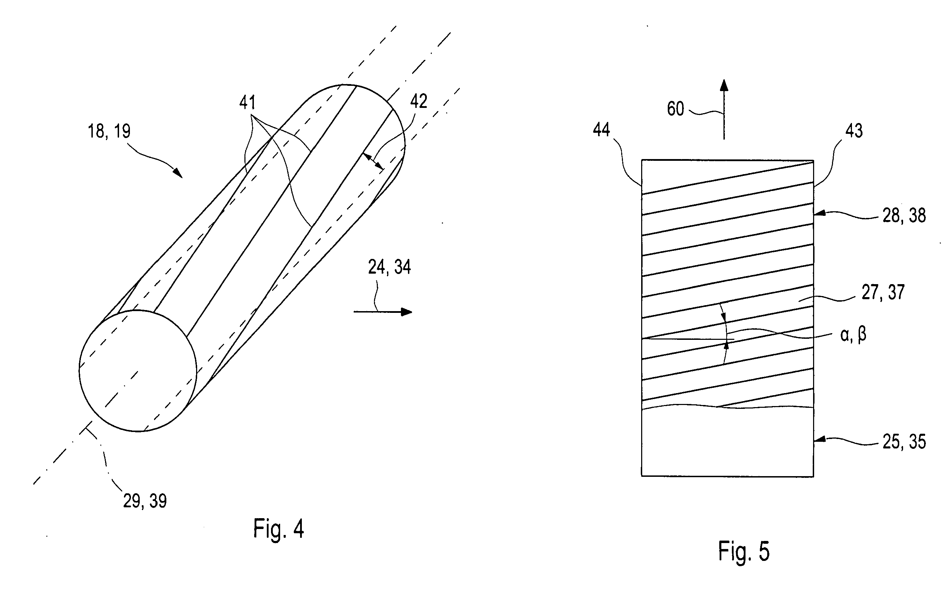

In den Maschinenkonfigurationen nach Figur 1 und 2 für die ersten und zweiten Papierbahnen 26, 36 jeweils die erste und zweite schräggestellte Führungswalze 23, 33 angeordnet. Diese straffen die noch ungewellte Papierbahn 26 bzw. 36, so dass diese vorgespannt auf die Umfangsflächen der jeweils helicoidale Riffelungen 41 aufweisenden ersten und zweiten Riffelwalze 31 auflaufen. Es entsteht jeweils das in der Figur 5 dargestellte dargestellte Wellenprofil in der ersten und zweiten einflutigen Wellpappebahn 28, 38 mit den Schränkungswinkeln α, β.

Während bei der Maschinenkonfiguration gemäß Figur 1 hinter der zweiten Einseitigen Maschine 30 eine Umlenkung 50 erforderlich ist, kann diese bei der Konfiguration gemäß Figur 2 aufgrund der entsprechenden Förderrichtungen der ungewellten Bahnen 25, 35und der Papierbahnen 26, 36 eingespart werden. In der in Figur 1 dargestellten Konfiguration werden einflutige Wellpappebahnen 28, 38 in der mittigen Trennebene 70 für ein vierlagiges Wellpappenprodukt 90 ohne Zwischenlage bereitgestellt. In Figur 2 ist die Erzeugung eines fünflagigen Wellpappenproduktes 90 mit der zusätzlichen ungewellte Bahn 55 dargestellt.

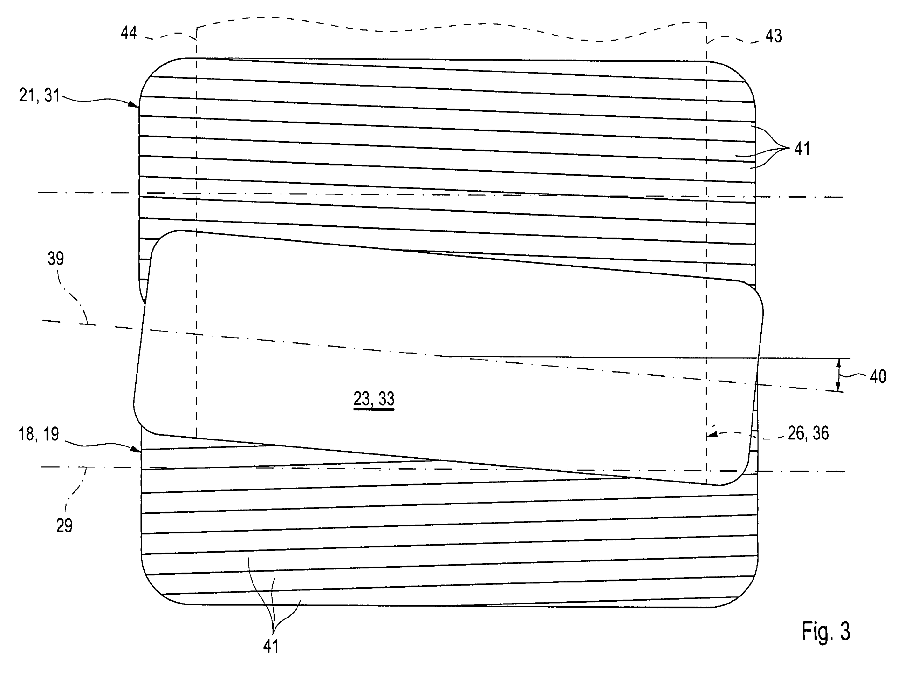

Figur 3 zeigt die Draufsicht auf eine schräggestellte Führungswalze 23 bzw. 33, die vor einer Riffelwalze 21 bzw. 31 liegt.

Figur 3 ist zu entnehmen, dass die schräggestellten Führungswalzen 23 bzw. 33, die vor den Riffelwalzen 21 und 31 angeordnet sind, in Bezug auf die Rotationsachse 29 bzw. 39 der Riffelwalze 21 bzw. 31 um einen Neigungswinkel 40 ausgelenkt. Beim Passieren der schräggestellten Führungswalzen 23 bzw. 33 erfahren die Papierbahnen 26 bzw. 36 eine Deformation bzw. Vorspannung und laufen gestrafft auf die Umfangsflächen der Riffelwalzen 21 bzw. 31 auf. Die helicoidale Riffelung 41 verläuft unter einem Steigungswinkel 42, der auch in der perspektivischen Ansicht gemäß Figur 4 dargestellt ist.

Die Riffelwalzen 21, 31 sind an jeweils einem Gegenstück 18, 19 angebracht, mit denen sie jeweils einen Walzenspalt bilden. Der Walzenspalt wird in Figur 3 durch die Führungswalze 23, 33 verdeckt.

Der Steigungswinkel 42 bestimmt die Orientierung des Wellenprofils, das durch die erste bzw. zweite Riffelwalze 21,31 auf die erste bzw. zweite Papierbahn 26, 36 geprägt wird. Nach Durchlaufen des Anpressspalts des Anpressgurts 22, 32 bildet die Papierbahn 26, 36 die gewellte Bahn 27, 37 der ersten bzw. zweiten einflutigen Wellpappebahn 28, 38, wie in Fig. 5 dargestellt. Die Orientierung und Größe des Neigungswinkels 40 der Führungswalzen 26, 36 die Orientierung und Größe des Steigungswinkels 42 der helicoidalen Riffelwalzen 21, 31 können je nach erforderlicher Konfiguration geändert werden.

Der Darstellung gemäß Figur 4 ist eine perspektivische Draufsicht auf eine der Riffelwalzen 21 bzw. 31 zu entnehmen.

Figur 4 zeigt, dass am Umfang der Riffelwalze 21 bzw. 31 eine helicoidal verlaufende Riffelung 41 ausgebildet ist. Wie in Figur 4 angedeutet, besteht zwischen einer gestrichelt eingezeichneten Parallele zur Rotationsachse 29 bzw. 39 der Riffelwalze 21 bzw. 31 ein Steigungswinkel 42. Der Steigungswinkel 42 liegt in bevorzugter Weise zwischen 0° und 13°, in besonders bevorzugter Weise zwischen 3° und 10°.
Durch den Pfeil, der mit dem Bezugszeichen 24 und 34 bezeichnet ist, sind die Bahnförderrichtungen bezeichnet, in der die erste bzw. zweite einflutige Wellpappebahn 28, 38 aus der ersten bzw. zweiten Einseitigen Maschine 20, 30 austreten.

Figur 5 zeigt eine Draufsicht auf die einflutige Wellpappebahn 28, 38. Der Darstellung gemäß Figur 5 ist zu entnehmen, dass die in Laufrichtung 60, laufenden einflutigen Wellpappebahnen 28 bzw. 38 jeweils gewellte Bahnen 27 bzw. 37 und jeweils ungewellten Bahnen 25 bzw. 35 umfassen. In Figur 5 verdeckt die gewellte Bahn 27, 37 die ungewellten Bahnen 25, 35. Das Wellenprofil der gewellten Bahnen 27, 37 ist in Bezug auf die Seitenränder 43, 44 um die Schränkungswinkel α bzw. β verschränkt. Die Schränkungswinkel α, β werden durch den Steigungswinkel 42 der Riffelwalze 21 bzw. 31 der ersten bzw. zweiten Einseitigen Maschine und deren Gegenstücken 18, 19 bestimmt. Seitliche Ränder der Papierbahnen 26, 36, die nach Austritt aus der ersten bzw. zweiten Einseitigen Maschine 20, 30 die gewellte Bahn 27, 37 der ersten bzw. zweiten einflutigen Wellpappebahn 28, 38 bilden, definieren die Seitenränder 43, 44 der ersten bzw. zweiten einflutigen Wellpappebahn 28, 38 und des Wellpappenprodukts 90.

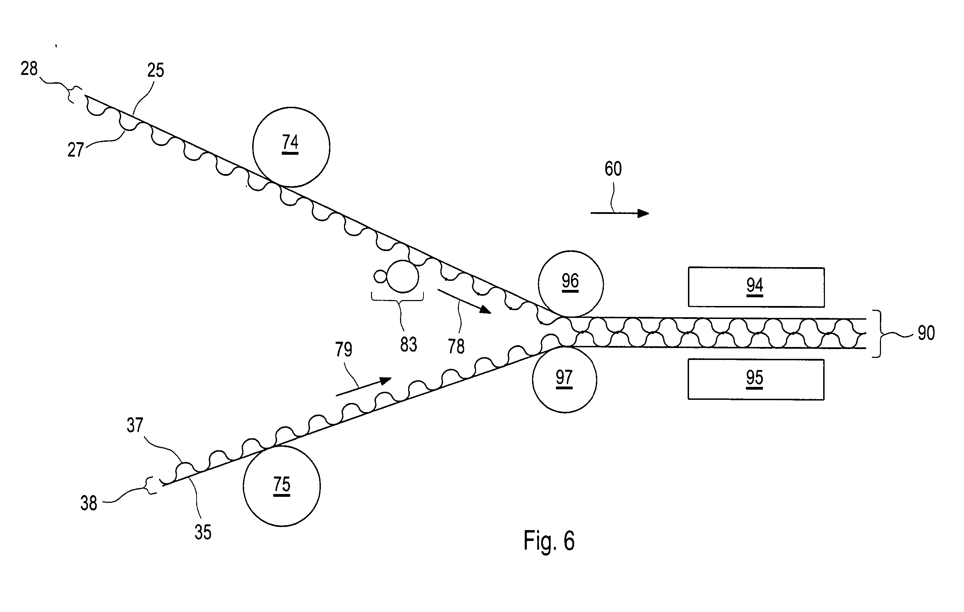

In Figur 6 ist eine Zusammenführung einer ersten einflutigen Wellpappebahn 28 mit einer zweiten einflutigen Wellpappebahn 38 dargestellt. Die erste einflutige Wellpappebahn, die eine erste ungewellte Bahn 25 und eine erste gewellte Bahn 27 umfasst, wird hierbei an einer ersten Regelwalze 74 entlanggeführt. Ferner wird die einflutige Wellpappebahn 28 an einer ersten Umlenkwalze 96 umgelenkt. In der Zusammenführung nach Figur 6 wird die zweite einflutige Wellpappebahn 38, die eine zweite gewellte Bahn 37 und eine zweite ungewellte Bahn 35 umfasst, an einer zweiten Regelwalze 75 entlanggeführt und bei einer zweiten Umlenkwalze 97 umgelenkt. Das Fördern der ersten einflutigen Wellpappebahn erfolgt in eine erste Förderrichtung 78, das Fördern der zweiten einflutigen Wellpappebahn 38 in eine zweite Förderrichtung 79. Die einflutigen Wellpappebahnen 28, 38 werden im Bereich der Umlenkwalzen 96, 97 zu einem Wellpappenprodukt 90-zusammengeführt. Das Wellpappenprodukt 90 wird entlang einer Laufrichtung 60 weitertransportiert. Des Weiteren ist im Bereich der Zusammenführung ein Leimauftragwerk 83 angebracht, welches Kopfpunkte der gewellten Bahn 27 mit einem Klebstoff versieht. Der durch das Leimauftragwerk 83 aufgebrachte Klebstoff gewährleistet ein Verbinden der ersten und zweiten einflutigen Wellpappebahn 28, 38 zum Wellpappenprodukt 90. Ferner werden die erste und zweite einflutige Wellpappebahn 28, 38 derart zusammengefügt, dass sich die Kopfpunkte der ersten und zweiten gewellten Bahn 27, 37 im Wellpappenprodukt 90 berühren. Zur weiteren Bearbeitung des Wellpappenprodukts sind in Laufrichtung 60 gesehen hinter den Umlenkwalzen 96, 97 weitere Bearbeitungsvorrichtungen 94, 95 ausgebildet. Eine Bearbeitungsvorrichtung 94, 95 kann als Anpressplatte, Heizplatte, Anpressgurt oder ähnliches ausgebildet sein. Die Bearbeitungsvorrichtungen dienen dem Stabilisieren des Wellpappenprodukts 90.

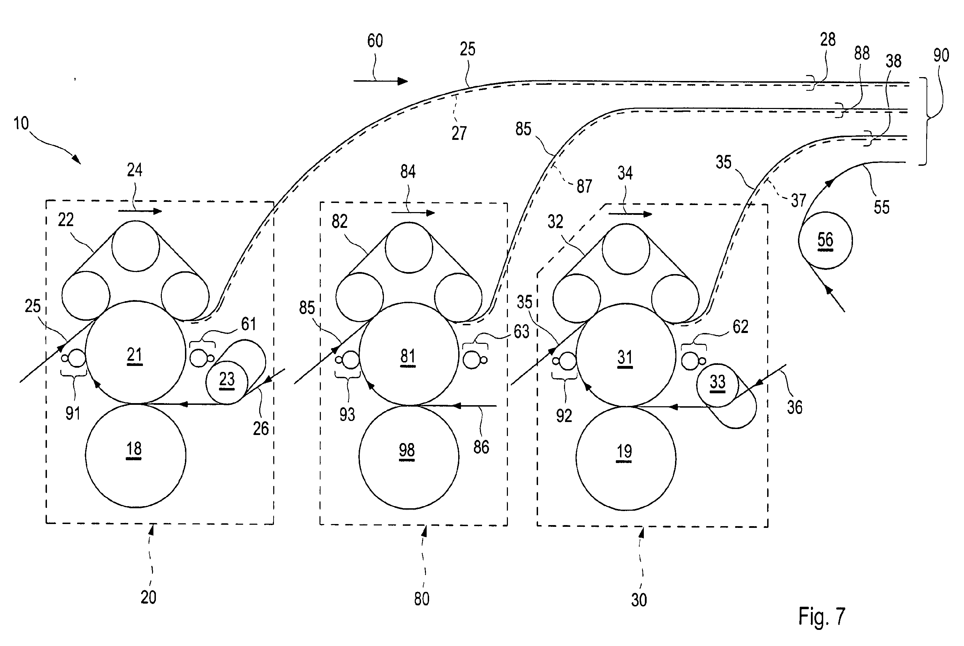

Figur 7 zeigt schematisch eine bevorzugte Ausführungsform der erfindungsgemäßen Vorrichtung 10. Diese umfasst eine erste Einseitige Maschine 20, die eine erste Riffelwalze 21 mit Gegenstück '18 aufweist. Die erste Riffelwalze 21 und deren Gegenstück '18 bilden einen Walzenspalt, in den eine erste Papierbahn 26 eingeführt wird. Die erste Riffelwalze 21 weist eine (nicht dargestellte) Riffelung auf, mittels der ein Wellenprofil auf die erste Papierbahn 26 aufgeprägt wird. Des Weiteren verfügt die erste Einseitige Maschine über eine erste schräggestellte Führungswalze 23, um die die erste Papierbahn 26 geführt wird. Die erste schräggestellte Führungswalze 23 ist in einem vertikalen Neigungswinkel angebracht und gewährleistet eine straffe Führung der ersten Papierbahn 26. Ferner weist die erste Einseitige Maschine 20 ein Paar Leimauftragwalzen 91 auf, das eine Seite der ersten Papierbahn 26 mit Klebstoff versieht. Die erste Einseitige Maschine 20 ist mit einem zusätzlichen Leimauftragwerk 61 ausgestattet, das sich in Fig. 7 nicht im Eingriff befindet. Das zusätzliche Leimauftragwerk 61 erlaubt es, die erste Einseitige Maschine 20 umzurüsten. Des Weiteren verfügt die erste Einseitige Maschine 20 über einen ersten Anpressgurt 22, der an der ersten Riffelwalze 21 anliegt. In den Walzenspalt zwischen dem ersten Anpressgurt 22 und der ersten Riffelwalze 21 wird die mit einem Wellenprofil versehene erste Papierbahn 26 und eine erste ungewellte Bahn 25 eingeführt. Der erste Anpressgurt 22 verbindet die erste Papierbahn 26 mit der ungewellten Bahn 25 und bildet aus diesen eine erste einflutige Wellpappebahn 28. Die erste einflutige Wellpappebahn umfasst die erste ungewellte Bahn 25 und eine gewellte Bahn 27, die aus der ersten Papierbahn 26 hervorgeht. Die erste Einseitige Maschine 20 weist eine erste Bahnförderrichtung 24 auf, die gleichsinnig mit der Laufrichtung 60 der erfindungsgemäßen Vorrichtung 10 ist.

Des Weiteren weist die in Figur 7 dargestellte Anordnung der erfindungsgemäßen Vorrichtung eine zweite einseitige Maschine 30 auf, die eine zweite Riffelwalze 31 mit Gegenstück '19 umfasst. Die zweite Riffelwalze 31 bildet mit ihrem Gegenstück '19 einen Walzenspalt aus, in den eine zweite Papierbahn 36 eingeführt wird. Die zweite Riffelwalze prägt auf die zweite Papierbahn 36 ein Wellenprofil auf. Die zweite Riffelwalze 31 weist ferner eine (nicht dargestellte) helicoidale Riffelung 41 auf. Des Weiteren wird die zweite Papierbahn 36 vor Eintritt in den Walzenspalt zwischen der zweiten Riffelwalz 31 und deren Gegenstück '19 über eine zweite schräggestellte Führungswalze 33 geführt. Die zweite schräggestellte Führungswalze 33 ist um einen vertikalen Neigungswinkel 40 geneigt. Die vertikalen Neigungswinkel 40 der ersten und zweiten schräggestellten Führungswalze 23, 33 sind hierbei gegensinnig orientiert. In Bezug auf die Förderrichtung der ersten Papierbahn 26 wird deren linker Seitenrand gestrafft, in Bezug auf die Förderrichtung der zweiten Papierbahn 36 wird deren rechter Seitenrand gestrafft. Des Weiteren ist die zweite Einseitige Maschine 30 mit einer zweiten Leimauftragwalze 92 ausgestattet, die die zweite Papierbahn 36 mit Klebstoff versieht. Ferner ist die zweite Einseitige Maschine 30 mit einem zusätzlichen Leimauftragwerk 62 ausgestattet, das sich in Fig. 7 nicht im Eingriff befindet. Das zusätzliche Leimauftragwerk 62 erlaubt es, die zweite Einseitige Maschine 30 umzurüsten. Die zweite Einseitige Maschine 30 weist einen zweiten Anpressgurt 32 auf, der an der zweiten Riffelwalze 31 anliegt. In den Spalt, den der zweite Anpressgurt 32 und die zweite Riffelwalze 31 ausbilden, wird die mit einem Wellenprofil versehene zweite Papierbahn 36 und die zweite ungewellte Bahn 35 eingeführt. Im Walzenspalt zwischen dem zweiten Anpressgurt 32 und der zweiten Riffelwalze werden die zweite ungewellte Bahn 35 und die zweite Papierbahn 36 zu einer zweiten einflutigen Wellpappebahn 38 verbunden. Die zweite einflutige Wellpappebahn 38 umfasst die zweite ungewellte Bahn 35 und eine zweite gewellte Bahn 37, die aus der zweiten Papierbahn 36 hervorgeht. Die zweite Einseitige Maschine 30 weist eine zweite Bahnförderrichtung 34 auf, in welche die zweite einflutige Wellpappebahn 38 gefördert wird. Dabei ist die zweite Bahnförderrichtung 34 gleichsinnig mit der Laufrichtung 60 der erfindungsgemäßen Vorrichtung.

Des Weiteren verfügt die erfindungsgemäße Vorrichtung gemäß Figur 7 über eine dritte Einseitige Maschine 80, die eine dritte Riffelwalze 81 und deren Gegenstück 98 umfasst. Die dritte Riffelwalze 81 und deren Gegenstück 98 bilden einen Walzenspalt, in den eine dritte Papierbahn 86 eingeführt wird. Die dritte Riffelwalze 81 versieht die dritte Papierbahn 86 mit einem Wellenprofil, wobei die dritte Riffelwalze 81 über eine (nicht dargestellte) parallele Riffelung verfügt. Ferner weist die dritte Einseitige Maschine 80 ein drittes Leimauftragwerk 93 auf, das die mit einem Wellenprofil beaufschlagte dritte Papierbahn 86 mit Klebstoff versieht. Die dritte Einseitige Maschine 20 ist ferner mit einem zusätzlichen Leimauftragwerk 63 ausgestattet, das sich in Fig. 7 nicht im Eingriff befindet. Das zusätzliche Leimauftragwerk 63 erlaubt es, die dritte Einseitige Maschine 80 umzurüsten. Ferner verfügt die dritte Einseitige Maschine über einen dritten Anpressgurt 82, der in Kontakt mit der dritten Riffelwalze 81 steht. Der dritte Anpressgurt 82 bildet mit der dritten Riffelwalze 81 einen Spalt aus, in den die dritte Papierbahn 86 und eine dritte ungewellte Bahn 85 eingeführt werden. Der dritte Anpressgurt 82 verbindet im Zusammenspiel mit der dritten Riffelwalze 81 die dritte ungewellte Bahn 85 mit der dritten Papierbahn zu einer dritten einflutigen Wellpappebahn 88. Die dritte einflutige Wellpappebahn 88 umfasst die dritte ungewellte Bahn 85 und eine dritte gewellte Bahn 87, die aus der dritten Papierbahn 86 hervorgeht. Die dritte Einseitige Maschine 80 weist eine dritte Bahnförderrichtung 84 auf, in die die dritte einflutige Wellpappebahn 88 gefördert wird. Die dritte Bahnförderrichtung 84 ist gleichsinnig mit der Laufrichtung 60 der erfindungsgemäßen Vorrichtung. Des Weiteren verfügt die erfindungsgemäße Vorrichtung gemäß Figur 7 über eine Zuführwalze 56, über die eine zusätzliche ungewellte Bahn 55 zugeführt wird. Die erste einflutige Wellpappebahn ist derart ausgerichtet, dass die erste gewellte Bahn 27 sich gegenüber der dritten ungewellte Bahn 85 befindet. Des Weiteren ist die dritte einflutige Wellpappebahn 88 derart angeordnet, dass die dritte gewellte Bahn 87 der zweiten ungewellten Bahn 35 zugewandt ist. Die zweite einflutige Wellpappebahn 38 ist derart angeordnet, dass deren zweite gewellte Bahn 37 der zusätzlichen ungewellten Bahn 25 zugewandt ist. Die erste, zweite und dritte einflutige Wellpappebahn 28, 38, 88 und die zusätzliche ungewellte Bahn werden in der beschriebenen Anordnung zu einem Wellpappenprodukt 90 verbunden.

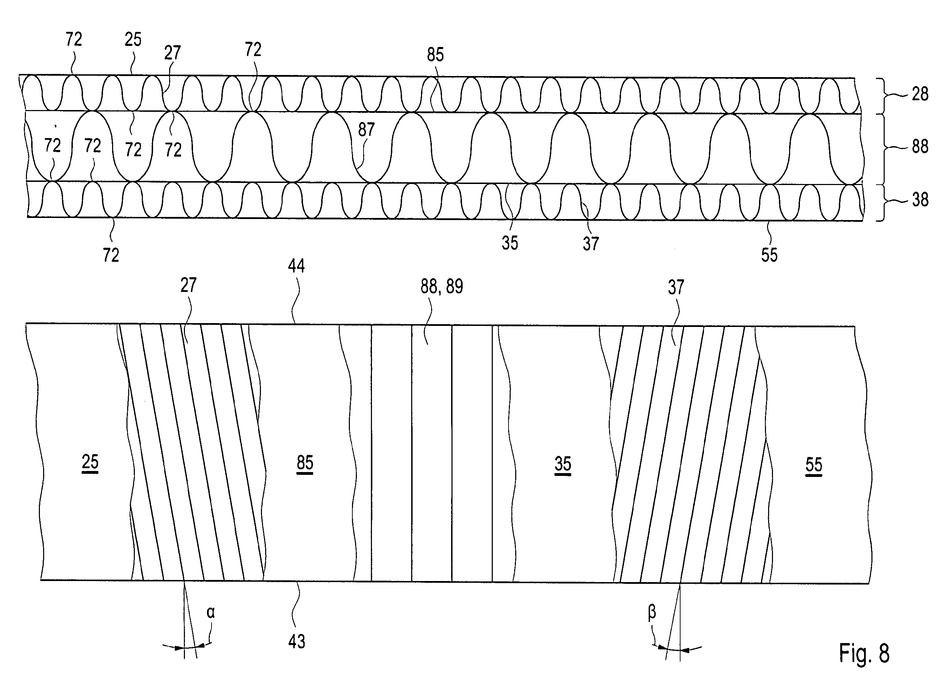

In Figur 8 ist der Aufbau eines erfindungsgemäßen Wellpappenprodukts dargestellt. Dieses umfasst eine erste, zweite, dritte und zusätzliche Decklage 25, 85, 35 und eine zusätzliche Decklage 55. Zwischen den Decklagen 25, 35, 85, 55 sind eine erste, zweite und dritte gewellte Bahn 27, 37, 87 angeordnet. Die dritte gewellte Bahn 87 weist hierbei eine größere Fluthöhe auf als die zweite und dritte gewellte Bahn 27, 37. Des Weiteren sind Kopfpunkte 72 der ersten und zweiten gewellten Bahn 27, 37 mit der zweiten bzw. dritten ungewellten Bahn 35, 85 im Bereich von Kopfpunkten 72 verbunden. Der Kontakt zwischen Kopf- und Fußpunkten 72 der gewellten Bahnen 27, 37, 87 gewährleistet bei einer Druckbelastung des Wellpappenprodukts 90 eine mechanisch günstige Krafteinleitung in die dritte gewellte Bahn 87. Des Weiteren weist die dritte gewellte Bahn 87 ein Wellenprofil auf, das im Wesentlichen im rechten Winkel zu Seitenrändern 43, 44 des Wellpappenprodukts 90 steht. Das Wellenprofil der ersten gewellten Bahn 27 ist ferner um einen Schränkungswinkel α verschränkt, das Wellenprofil der zweiten gewellten Bahn 37 um einen Schränkungswinkel β. Die Schränkungswinkel α, β sind hierbei gegensinnig orientiert. Das Wellenprofil 89 der dritten gewellten Bahn 87 bildet mit den Wellenprofilen der ersten und zweiten gewellten Bahn 27, 37 eine symmetrische Gitterstruktur aus. Die symmetrische Gitterstruktur der Wellenprofile gewährleistet eine hohe Steifigkeit des erfindungsgemäßen Wellpappenprodukts.

### Bezugszeichenliste

- 10: Vorrichtung
- 18: Gegenstück
- 19: Gegenstück
- 20: Erste Einseitige Maschine
- 21: Erste Riffelwalze
- 22: Erster Anpressgurt
- 23: Erste schräggestellte Führungswalze
- 24: Erste Bahnförderrichtung
- 25: Erste ungewellte Bahn
- 26: Erste Papierbahn
- 27: Gewellte Bahn
- 28: Erste einflutige Wellpappebahn
- 29: Rotationsachse Riffelwalze
- 30: Zweite Einseitige Maschine
- 31: Zweite Riffelwalze
- 32: Zweiter Anpressgurt
- 33: Zweite schräggestellte Führungswalze
- 34: Zweite Bahnförderrichtung
- 35: Zweite ungewellte Bahn
- 36: Zweite Papierbahn
- 37: Gewellte Bahn
- 38: Zweite einflutige Wellpappebahn
- 39: Rotationsachse schräggestellte Führungswalze
- 40: Neigungswinkel
- 41: Helicoidale Riffelung
- 42: Steigungswinkel
- 43: Seitenrand
- 44: Seitenrand
- 50: Umlenkung
- 51: Umschlingungswinkel
- 52: Umlenkradius
- 55: Zusätzliche ungewellte Bahn
- 56: Zuführwalze
- 60: Laufrichtung
- 61: Zusätzliches Leimauftragwerk
- 62: Zusätzliches Leimauftragwerk
- 63: Zusätzliches Leimauftragwerk
- 70: Trennebene
- 74: Erste Regelwalze
- 75: Zweite Regelwalze
- 78: Förderrichtung
- 79: Förderrichtung
- 80: Dritte Einseitige Maschine
- 81: Dritte Riffelwalze
- 82: Dritter Anpressgurt
- 83: Leimauftragwerk
- 84: Dritte Bahnförderrichtung
- 85: Zusätzliche ungewellte Bahn
- 86: Dritte Papierbahn
- 87: Dritte gewellte Bahn
- 88: Dritte einflutige Wellpappebahn
- 89: Paralleles Wellenprofil
- 90: Wellpappenprodukt
- 91: Leimauftragwerk
- 92: Leimauftragwerk
- 93: Leimauftragwerk
- 94: Bearbeitungsvorrichtung
- 95: Bearbeitungsvorrichtung
- 96: Erste Umlenkwalze
- 97: Zweite Umlenkwalze
- 98: Gegenstück
- α: Schränkungswinkel
- β: Schränkungswinkel

## Patentansprüche

1. Vorrichtung (10) zur Herstellung eines Wellpappenprodukts (90), umfassend zumindest eine erste Einseitige Maschine (20) und eine zweite Einseitige Maschine (30), die jeweils mit einer Riffelwalze (21, 31) versehen sind, wobei die Riffelwalzen (21, 31) zu einer Prägung eines Wellenprofils auf jeweils eine Papierbahn (26, 36) ausgebildet sind und wobei die Riffelwalzen (21, 31) mit je einem Gegenstück (18, 19) einen Walzenspalt ausbilden, **dadurch gekennzeichnet, dass** die erste Einseitige Maschine und die zweite Einseitige Maschine jeweils mit einem Anpressgurt (22, 32) versehen sind, wobei die Anpressgurte (22, 32) jeweils mit den Riffelwalzeen (21, 31) zu einem Verbinden der Papierbahnen (26, 36) mit jeweils einer ungewellten Bahn (25, 35) zu jeweils einer einflutigen Wellpappebahn (28, 38) ausgebildet sind, wobei zumindest die erste Einseitige Maschine (20) mit einer ersten schräggestellten Führungswalze (23) ausgestattet ist, deren Rotationsachse (29) zwischen Seitenrändern (43, 44) einer ersten Papierbahn (26) um einen vertikalen Neigungswinkel (40) geneigt ist, und die erste schräggestellte Führungswalze (23) vor dem Eintritt in den Walzenspalt angeordnet ist.

2. Vorrichtung (10) nach Anspruch 1, **dadurch gekennzeichnet, dass** die zweite Einseitige Maschine (30) mit einer zweiten schräggestellten Führungswalze (33) ausgestattet ist, deren Rotationsachse (39) zwischen Seitenrändern (43, 44) einer zweiten Papierbahn (36) um einen vertikalen Neigungswinkel (40) geneigt ist.

3. Vorrichtung (10) nach Anspruch 2, **dadurch gekennzeichnet, dass** die erste und zweite schräggestellte Führungswalze (40) um gegensinnig orientierte vertikale Neigungswinkel (40) geneigt sind.

4. Vorrichtung (10) nach einem der Ansprüche 1 bis 3, **dadurch gekennzeichnet**, die erste Einseitige Maschine (20) eine erste Bahnförderrichtung (24) aufweist, die einer zweiten Bahnförderrichtung (34) der zweiten Einseitigen Maschine (30) entgegengesetzt ist.

5. Vorrichtung (10) nach einem der Ansprüche 1 bis 4, **dadurch gekennzeichnet, dass** die zweite Einseitige Maschine (30) eine Umlenkung (50) zum Umlenken der zweiten einflutigen Wellpappebahn (38) aufweist, wobei die Umlenkung (50) als stationäres Leitblech oder stationäres Umlenkblech ausgeführt ist.

6. Vorrichtung (10) nach Anspruch 5, **dadurch gekennzeichnet, dass** die Umlenkung (50) einen Umschlingungswinkel (51) von 90° bis 180° aufweist.

7. Vorrichtung (10) nach Anspruch 5 oder 6, **dadurch gekennzeichnet, dass** die Umlenkung (50) einen Umlenkradius (52) im Bereich zwischen 0,5 m bis 1,5 m aufweist.

8. Vorrichtung (10) nach einem der Ansprüche 1 bis 7, **dadurch gekennzeichnet, dass** die Betriebsrichtung der zweiten Einseitigen Maschine (30) umkehrbar ist.

9. Vorrichtung (10) nach einem der Ansprüche 1 bis 8, **dadurch gekennzeichnet, dass** diese zur Herstellung einer dritten einflutigen Wellpappebahn (88) mit einer dritten Einseitigen Maschine (80) ausgestattet ist, die eine dritte Riffelwalze (81) aufweist, die zu einer Prägung eines Wellenprofils auf eine dritte Papierbahn (86) ausgebildet ist.

10. Verfahren zur Herstellung eines Wellpappenprodukts (90) mittels einer Vorrichtung (10), welche mit einer ersten Einseitigen Maschine (20) mit einer ersten Bahnförderrichtung (24) und einer zweiten Einseitigen Maschine (30) mit einer zweiten Bahnförderrichtung (34) ausgestattet ist, umfassend die Schritte:
a) Herstellen einer ersten einflutigen Wellpappebahn (28) mit einer ersten ungewellten Bahn (25) und einer ersten gewellten Bahn (27) in der ersten Einseitigen Maschine (20) mittels eines Anpressgurts (22),
b) Herstellen einer zweiten einflutigen Wellpappebahn (38) mit einer zweiten ungewellten Bahn (35) und einer zweiten gewellten Bahn (37)in der zweiten Einseitigen Maschine (30) mittels eines Anpressgurts (24),
c) Zusammenführen der ersten einflutigen Wellpappebahn (28) mit der zweiten einflutigen Wellpappebahn (38),
d) Verbinden der ersten einflutigen Wellpappebahn (28) mit der zweiten einflutigen Wellpappebahn (38) zu einem Wellpappenprodukt,
wobei die Schritte a) und b) jeweils ein Zufuhren einer ersten bzw. einer zweiten Papierbahn (26, 36) zu einer ersten bzw. zweiten Riffelwalze (21, 31) umfassen, und die erste bzw. zweite Papierbahn (26, 36) vor einem Kontakt mit der ersten bzw. zweiten Riffelwalze (21, 31) jeweils über eine vertikal geneigte Führungswalze (23, 33) gelenkt werden, wobei die erste und/oder zweite Papierbahn (26, 36) mittels der vertikal geneigten Führungswalzen (23, 33) beim Einzug in jeweils einen Walzenspalt zwischen den Riffelwalzen (21, 31) und deren Gegenstücken (18, 19) gestrafft wird.

11. Verfahren nach Anspruch 10, **dadurch gekennzeichnet, dass** die erste Einseitige Maschine (20) eine erste einflutige Wellpappebahn (28) in eine erste Bahnförderrichtung (24) fördert, die einer zweiten Bahnförderrichtung (34) der zweiten Einseitigen Maschine (30) entgegengesetzt ist

## Claims

1. Apparatus (10) for the production of a corrugated cardboard product (90), comprising at least one first one-sided machine (20) and one second one-sided machine (30) which are provided in each case with a grooving roller (21, 31), the grooving rollers (21, 31) being designed for embossing a wave profile in each case onto a paper web (26, 36), and the grooving rollers (21, 31) forming a nip with in each case one counterpiece (18, 19), **characterized in that** the first one-sided machine and the second one-sided machine are provided in each case with a press-down belt (22, 32), the press-down belts (22, 32) being designed in each case with the grooving rollers (21, 31) for connecting the paper webs (26, 36) in each case to a non-corrugated web (25, 35) to form in each case a single-flute corrugated cardboard web (28, 38), at least the first one-sided machine (20) being equipped with a first oblique guide roller (23), the axis of rotation (29) of which is inclined at a vertical inclination angle (40) between side margins (43, 44) of a first paper web (26), and the first oblique guide roller (23) being arranged before the entry into the nip.

2. Apparatus (10) according to Claim 1, **characterized in that** the second one-sided machine (30) is equipped with a second oblique guide roller (33), the axis of rotation (39) of which is inclined at a vertical inclination angle (40) between side margins (43, 44) of a second paper web (36).

3. Apparatus (10) according to Claim 2, **characterized in that** the first and the second oblique guide roller (40) are inclined at contradirectionally oriented vertical inclination angles (40).

4. Apparatus (10) according to one of Claims 1 to 3, **characterized in that** the first one-sided machine (20) has a first web conveying direction (24) which is opposite to a second web conveying direction (34) of the second one-sided machine (30).

5. Apparatus (10) according to one of Claims 1 to 4, **characterized in that** the second one-sided machine (30) has a deflection (50) for deflecting the second single-flute corrugated cardboard web (38), the deflection (50) being designed as a stationary guide plate or stationary deflecting plate.

6. Apparatus (10) according to Claim 5, **characterized in that** the deflection (50) has a looping angle (51) of 90° to 180°.

7. Apparatus (10) according to Claim 5 or 6, **characterized in that** the deflection (50) has a deflecting radius (52) in the range of between 0.5 m and 1.5 m.

8. Apparatus (10) according to one of Claims 1 to 7, **characterized in that** the operating direction of the second one-sided machine (30) is reversible.

9. Apparatus (10) according to one of Claims 1 to 8, **characterized in that** this is equipped, for the production of a third single-flute corrugated cardboard web (88), with a third one-sided machine (80) which has a third grooving roller (81) which is designed for embossing a wave profile onto a third paper web (86).

10. Method for the production of a corrugated cardboard product (90) by means of an apparatus (10) which is equipped with a first one-sided machine (20) having a first web conveying direction (24) and with a second one-sided machine (30) having a second web conveying direction (34), comprising the steps:
a) production of a first single-flute corrugated cardboard web (28) with a first non-corrugated web (25) and with a first corrugated web (27) in the first one-sided machine (20) by means of a press-on belt (22),
b) production of a second single-flute corrugated cardboard web (38) with a second non-corrugated web (35) and with a second corrugated web (37) in the second one-sided machine (30) by means of a press-on belt (24),
c) bringing of the first single-flute corrugated cardboard web (28) together with the second single-flute corrugated cardboard web (38),
d) connection of the first single-flute corrugated cardboard web (28) to the second single-flute corrugated cardboard web (38) to form a corrugated cardboard product,
steps a) and b) comprising in each case a feed of a first and a second paper web (26, 36) to a first and second grooving roller (21, 31) respectively, and the first and second paper web (26, 36) being steered in each case via a vertically inclined guide roller (23, 33) before contact with the first and second grooving roller (21, 31) respectively, the first and/or the second paper web (26, 36) being tautened by means of the vertically inclined guide rollers (23, 33) when being drawn in each case into a nip between the grooving rollers (21, 31) and their counterpieces (18, 19).

11. Method according to Claim 10, **characterized in that** the first one-sided machine (20) conveys a first single-flute corrugated cardboard web (28) in the first web conveying direction (24) which is opposite to a second web conveying direction (34) of the second one-sided machine (30).

## Revendications

1. Dispositif (10) de fabrication d'un produit en carton ondulé (90), comprenant au moins une première machine simple-face (20) et une deuxième machine simple-face (30), qui sont chacune pourvues d'un rouleau onduleur (21, 31), les rouleaux onduleurs (21, 31) étant réalisés de manière à gaufrer un profil ondulé sur une bande de papier respective (26, 36) et les rouleaux onduleurs (21, 31) constituant, avec une pièce conjuguée respective (18, 19), un interstice de rouleaux, **caractérisé en ce que** la première machine simple-face et la deuxième machine simple-face sont chacune pourvues d'une courroie de pressage (22, 32), les courroies de pressage (22, 32) étant réalisées à chaque fois avec les rouleaux onduleurs (21, 31) de manière à assembler les bandes de papier (26, 36), avec une bande non ondulée (25, 35) pour former à chaque fois une bande de carton ondulé à simple cannelure (28, 38), au moins la première machine simple-face (20) étant munie d'un premier rouleau de guidage orienté obliquement (23), dont l'axe de rotation (29) entre des bords latéraux (43, 44) d'une première bande de papier (26) est incliné suivant un angle d'inclinaison vertical (40), et le premier rouleau de guidage orienté obliquement (23) étant disposé avant l'entrée dans l'interstice de rouleaux.

2. Dispositif (10) selon la revendication 1, **caractérisé en ce que** la deuxième machine simple-face (30) est munie d'un deuxième rouleau de guidage orienté obliquement (33), dont l'axe de rotation (39) entre les bords latéraux (43, 44) d'une deuxième bande de papier (36) est incliné d'un angle d'inclinaison vertical (40).

3. Dispositif (10) selon la revendication 2, **caractérisé en ce que** le premier et le deuxième rouleau de guidage orienté obliquement (40) sont inclinés suivant des angles d'inclinaison verticaux (40) orientés en sens inverse.

4. Dispositif (10) selon l'une quelconque des revendications 1 à 3, **caractérisé en ce que** la première machine simple-face (20) présente une première direction de transport de bande (24) qui est opposée à une deuxième direction de transport de bande (34) de la deuxième machine simple-face (30).

5. Dispositif (10) selon l'une quelconque des revendications 1 à 4, **caractérisé en ce que** la deuxième machine simple-face (30) présente un renvoi (50) pour renvoyer la deuxième bande de carton ondulé à simple cannelure (38), le renvoi (50) étant réalisé sous forme de tôle directrice stationnaire ou sous forme de tôle de renvoi stationnaire.

6. Dispositif (10) selon la revendication 5, **caractérisé en ce que** le renvoi (50) présente un angle d'enveloppement (51) de 90° à 180°.

7. Dispositif (10) selon la revendication 5 ou 6, **caractérisé en ce que** le renvoi (50) présente un rayon de renvoi (52) dans une plage de 0,5 m à 1,5 m.

8. Dispositif (10) selon l'une quelconque des revendications 1 à 7, **caractérisé en ce que** la direction de fonctionnement de la deuxième machine simple-face (30) peut être inversée.

9. Dispositif (10) selon l'une quelconque des revendications 1 à 8, **caractérisé en ce que** celui-ci est muni d'une troisième machine simple-face (80) pour fabriquer une troisième bande de carton ondulé à simple cannelure (88), ladite troisième machine simple-face présentant un troisième rouleau onduleur (81) qui est réalisé de manière à gaufrer un profil ondulé sur une troisième bande de papier (86).

10. Procédé de fabrication d'un produit en carton ondulé (90) au moyen d'un dispositif (10), qui est muni d'une première machine simple-face (20) avec une première direction de transport de bande (24) et d'une deuxième machine simple-face (30) avec une deuxième direction de transport de bande (34), comprenant les étapes suivantes :
a) fabrication d'une première bande de carton ondulé à simple cannelure (28) avec une première bande non ondulée (25) et une première bande ondulée (27) dans la première machine simple-face (20) au moyen d'une courroie de pressage (22),
b) fabrication d'une deuxième bande de carton ondulé à simple cannelure (38) avec une deuxième bande non ondulée (35) et une deuxième bande ondulée (37) dans la deuxième machine simple-face (30) au moyen d'une courroie de pressage (24),
c) réunion de la première bande de carton ondulé à simple cannelure (28) avec la deuxième bande de carton ondulé à simple cannelure (38),
d) assemblage de la première bande de carton ondulé à simple cannelure (28) avec la deuxième bande de carton ondulé à simple cannelure (38) pour produire un produit en carton ondulé,
les étapes a) et b) comprenant à chaque fois une alimentation d'une première et d'une deuxième bande de papier (26, 36) à un premier et un deuxième rouleau onduleur respectif (21, 31), et la première et la deuxième bande de papier (26, 36) étant déviées avant un contact avec le premier et le deuxième rouleau onduleur respectif (21, 31) à chaque fois par le biais d'un rouleau de guidage incliné verticalement (23, 33), la première et/ou la deuxième bande de papier (26, 36) étant tendues au moyen du rouleau de guidage incliné verticalement (23, 33) lors de l'insertion dans un interstice de rouleaux respectif entre les rouleaux onduleurs (21, 31) et leurs pièces conjuguées (18, 19).

11. Procédé selon la revendication 10, **caractérisé en ce que** la première machine simple-face (20) transporte une première bande de carton ondulé à simple cannelure (28) dans une première direction de transport de bande (24) qui est opposée à une deuxième direction de transport de bande (34) de la deuxième machine simple-face (30).
